Europäisches Patentamt

European Patent Office

Office européen des brevets

(19)

(11) **EP 0 832 168 B1**

(12) **FASCICULE DE BREVET EUROPEEN**

(45) Date de publication et mention
de la délivrance du brevet:
**12.12.2001 Bulletin 2001/50**

(51) Int Cl.⁷: **B01J 23/56**, C10G 35/09

(21) Numéro de dépôt: **96922929.3**

(86) Numéro de dépôt international:
**PCT/FR96/00916**

(22) Date de dépôt: **14.06.1996**

(87) Numéro de publication internationale:
**WO 97/00304 (03.01.1997 Gazette 1997/02)**

(54) **CATALYSEURS UTILISABLES DANS LES REACTIONS DE TRANSFORMATION D'HYDROCARBURES CONTENANT UN METAL DOPANT**

IN KOHLENWASSERSTOFFUMWANDLUNG VERWENDBARE, EIN DOTIERUNG-METALL ENTHALTENDE KATALYSATOREN

CATALYSTS CONTAINING A DOPING METAL FOR USE IN HYDROCARBON CONVERSION REACTIONS

(84) Etats contractants désignés:
**BE DE ES GB IT NL**

(30) Priorité: **16.06.1995 FR 9507196
16.06.1995 FR 9507197
16.06.1995 FR 9507192**

(43) Date de publication de la demande:
**01.04.1998 Bulletin 1998/14**

(73) Titulaire: **INSTITUT FRANCAIS DU PETROLE
92506 Rueil Malmaison Cédex (FR)**

(72) Inventeurs:
• **ALARIO, Fabio
F-92200 Neuilly-sur-Seine (FR)**
• **DEVES, Jean-Marie
F-78400 Chatou (FR)**
• **EUZEN, Patrick
F-92500 Rueil-Malmaison (FR)**

(74) Mandataire: **Des Termes, Monique et al
BREVALEX
3, rue du Docteur Lancereaux
75008 Paris (FR)**

(56) Documents cités:
**EP-A- 0 034 228       EP-A- 0 317 103
FR-A- 2 187 887       FR-A- 2 280 426
FR-A- 2 659 569       US-A- 3 736 252
US-A- 3 915 845       US-A- 3 965 252
US-A- 4 152 246       US-A- 4 165 276
US-A- 4 677 094       US-A- 4 886 928
US-A- 4 963 249**

Remarques:
Le dossier contient des informations techniques présentées postérieurement au dépôt de la demande et ne figurant pas dans le présent fascicule.

## Description

La présente invention concerne un catalyseur qui comprend une matrice constituée d'un mélange d'alumine de transition $\eta$ et d'alumine de transition $\gamma$, ou encore, au moins un métal dopant choisi dans le groupe constitué par le titane, le zirconium, le hafnium, le cobalt, le nickel, le zinc, les lanthanides et les métaux alcalins et alcalino-terreux, au moins un halogène, au moins un métal noble et au moins un métal promoteur.

L'invention concerne également le procédé de préparation de ce catalyseur. Ce catalyseur peut notamment s'utiliser pour la transformation d'hydrocarbures. Ce procédé peut s'utiliser en particulier dans les procédés de reformage catalytique.

Le reformage catalytique est un procédé permettant d'améliorer l'indice d'octane des coupes pétrolières et en particulier de l'essence lourde de distillation par transformation des n-paraffines et des naphtènes en hydrocarbures aromatiques.

L'opération de reformage catalytique consiste donc à transformer d'une part les n-paraffines en $C_7$-$C_{10}$ en aromatiques et en paraffines légères et d'autre part les naphtènes en $C_7$-$C_{10}$ en aromatiques et en paraffines légères. Ces réactions sont illustrées notamment par la transformation par déshydrogénation des cyclohexanes et la déhydroisomérisation des alkylcyclopentanes pour donner des aromatiques, le méthylcyclohexane donnant par exemple du toluène, ainsi que par la transformation par cyclisation des n-paraffines en aromatiques, le n-heptane donnant par exemple du toluène.

Lors du reformage catalytique se produisent également des réactions de craquage des n-paraffines lourdes en paraffines légères conduisant notamment à des produits en C1-C4 essentiellement du propane, de l'isobutane : ces réactions sont préjudiciables au rendement en reformat.

Enfin, il se produit également la formation de coke par condensation de noyaux aromatiques formant un produit solide, riche en carbone qui se dépose sur le catalyseur.

Ces catalyseurs de reformage sont extrêmement sensibles, outre le coke, à divers poisons susceptibles de dégrader leur activité : en particulier le soufre, l'azote, les métaux et l'eau.

Le coke, en se déposant sur la surface du catalyseur entraîne une perte d'activité au cours du temps qui conduit à des températures de fonctionnement plus élevées, un rendement en reformat plus faible, et un rendement en gaz plus important.

De ce fait et eu égard à la régénération du catalyseur, le procédé de reformage catalytique peut être mis en oeuvre de deux manières différentes : de manière semi-régénérative ou cyclique et de manière continue. Dans le premier cas, le procédé est réalisé en lit fixe, dans le second en lit mobile.

Dans le procédé semi-régénératif, pour compenser la perte d'activité du catalyseur, on augmente progressivement la température puis l'installation est arrêtée pour procéder à la régénération du catalyseur en éliminant le coke. Dans le reformage cyclique qui est en fait une variante du procédé semi-régénératif, l'installation comporte plusieurs réacteurs en série et chacun est mis hors service à tour de rôle, les dépôts de coke sont éliminés du catalyseur mis hors circuit et le catalyseur est régénéré tandis que les autres réacteurs restent en fonctionnement.

Dans le reformage continu, les réacteurs mis en oeuvre sont des réacteurs à lit mobile opérant à basse pression (moins de 15 bars), ce qui permet d'améliorer de façon importante les rendements en reformat et en hydrogène en favorisant les réactions d'aromatisation au détriment de celle de craquage, par contre la formation de coke est fortement accélérée. Le catalyseur traverse les réacteurs puis une section régénératrice.

Du fait des réactions chimiques mises en jeu dans les procédés de reformage, il est nécessaire d'utiliser un catalyseur bifonctionnel qui associe deux types d'activité : à savoir l'activité hydrogénante-déshydrogénante d'un métal en particulier d'un métal noble tel que le platine, éventuellement associé à d'autres métaux comme le rhénium ou l'étain, dits métaux promoteurs, ce métal étant déposé à la surface d'une matrice poreuse. Cette matrice d'alumine contient un halogène, de préférence un chlorure qui fournit la fonction acide nécessaire aux isomérisations, aux cyclisations et aux réactions de craquage.

Les matrices généralement utilisées sont choisies parmi les oxydes réfractaires des métaux des groupes II, II et IV de la classification périodique des éléments. Le plus souvent l'oxyde d'aluminium de formule générale $Al_2O_3$, $nH_2O$ est utilisé. Sa surface spécifique est comprise entre 150 et 400 $m^2$/g. Cet oxyde dans lequel n est compris entre 0 et 0,6, est classiquement obtenu par déshydratation contrôlée d'hydroxydes dans lesquels $1 \leq n \leq 3$. Ces hydroxydes amorphes sont eux-mêmes préparés par précipitation en milieu aqueux de sels d'aluminium par des sels alcalins. Les conditions de précipitation et de mûrissement déterminent plusieurs formes d'hydroxydes dont les plus communs sont la boehmite (n=1), la gibbsite et la bayérite (n=3). En fonction des conditions hydrothermiques de traitements, ces hydroxydes donnent plusieurs oxydes ou alumines de transition. On dénombre ainsi les formes $\rho$, $\gamma$, $\eta$, $\chi$, $\theta$, $\delta$, $\kappa$, et $\alpha$ qui se différencient essentiellement par l'organisation de leur structure cristalline. Lors de traitements thermiques, ces différentes formes sont susceptibles d'évolution entre elles, selon une filiation complexe qui dépend des conditions opératoires du traitement. La forme $\alpha$ qui présente une surface spécifique et une acidité presque nulles, est la plus stable à haute température. Pour les catalyseurs, en particulier pour les catalyseurs de reformage, l'alumine de transition de forme γ est la plus souvent employée, en raison du compromis qu'elle présente entre ses propriétés d'acidité et de stabilité thermique.

Ainsi, le document US-A-3 915 845 décrit-il un catalyseur, en particulier un catalyseur de reformage comprenant, par exemple, Pt, Ge, La et un halogène. Le catalyseur comprend une matrice constituée, de préférence, d'alumine gamma pure ou bien d'alumine éta pure.

Le document EP-A-0 034 228 est relatif à un procédé de reformage avec un catalyseur qui est un mélange de deux composants différents et séparés : d'une part, un premier composant qui contient du platine et du rhénium sur une première matrice, par exemple, d'alumine gamma pure ; d'autre part, un second composant qui contient de l'iridium sur une seconde matrice différente et séparée, par exemple, d'alumine éta pure.

On n'est donc pas en présence, dans ce document, d'une seule et même matrice formée d'un mélange d'alumines gamma et éta.

Le document US-A-4 165 276 est relatif à un procédé de reformage qui utilise un catalyseur bimétallique de reformage comprenant du platine, un rhénium-carbonyle, un halogène, sur une matrice d'oxyde réfractaire. La matrice préférée est formée d'alumine état ou bien d'alumine gamma pure.

Comme indiqué ci-dessus, la fonction hydrogénation-déshydrogénation est de préférence fournie par un métal noble du groupe VIII de la classification périodique.

Beaucoup de travaux ont notamment porté sur la fonction déshydrogénante de ces catalyseurs et plus précisément sur la nature et le mode d'introduction du métal promoteur ajouté au platine. Ce second métal a pour principal effet de promouvoir l'activité déshydrogénante du platine. Dans certains cas, ce second métal ou promoteur, a également pour effet de limiter la perte de dispersion des atomes de platine à la surface du support. Cette perte de dispersion est en partie responsable de la désactivation du catalyseur.

Parmi l'ensemble des métaux promoteurs étudiés, deux métaux tiennent une place prépondérante : le rhénium et l'étain. En effet, ce sont ces deux métaux qui procurent vraisemblablement les meilleurs effets de promotion du platine.

Ainsi, l'utilisation de rhénium a permis, en particulier, d'accroître la stabilité du catalyseur vis-à-vis de sa désactivation par dépôt de coke. Ce type de catalyseur est utilisé le plus souvent dans des unités à lit fixe. Et grâce à ce gain de stabilité, la durée des cycles réactionnels compris entre deux régénérations, a pu être augmentée.

L'étain, quant à lui, a permis d'améliorer les performances de ces catalyseurs lorsqu'ils sont utilisés à basse pression. Cette amélioration conjointe à leur plus faible activité craquante, a permis d'obtenir des rendements en reformat améliorés surtout dans les procédés à régénération continue fonctionnant à basse pression opératoire. Des catalyseurs de ce type pouvant contenir du rhénium, de l'étain ou encore du plomb ont été notamment décrits dans US-A-3 700 588 et US-A-3 415 737

Le catalyseur doit présenter pour la transformation des hydrocarbures un niveau maximum d'activité mais, en plus, il doit activer cette transformation avec la plus grande sélectivité possible. En particulier, les pertes d'hydrocarbures sous forme de produits légers contenant de 1 à 4 atomes de carbone doivent être limitées. La fonction acide est nécessaire aux réactions produisant des aromatiques et améliorant l'indice d'octane. Malheureusement, cette fonction est également responsable des réactions de craquage qui conduisent à la formation des produits légers. Par conséquent, il est clair que l'optimisation de la qualité de cette fonction acide est importante pour gagner encore en sélectivité sans, pour autant, diminuer l'activité du catalyseur.

Les catalyseurs doivent également être rendus plus stables, c'est-à-dire résistants à l'empoisonnement par le coke.

D'autre part, on a vu que les catalyseurs sont utilisés soit dans des procédés à lit fixe, soit dans des procédés à lit mobile. Dans ces derniers, les catalyseurs subissent un grand nombre de régénérations. Ces traitements qui consistent, entre autres, à brûler le coke déposé sur le catalyseur, se déroulent à haute température et en présence de vapeur d'eau. Malheureusement, ces conditions sont favorables à la dégradation du catalyseur. Il est donc important de rechercher à augmenter la résistance des catalyseurs dans ces conditions.

En outre, ces catalyseurs se présentent sous forme d'extrudés ou de billes d'une taille suffisante de manière à laisser un passage relativement facile aux réactifs et produits gazeux. L'usure de ces catalyseurs en particulier par frottement dans les unités à lit mobile, provoque la formation de poussières et de grains plus fins. Ces grains plus fins perturbent l'écoulement gazeux et obligent à augmenter la pression d'entrée des réactifs, voire, dans certains cas, à arrêter l'opération de l'unité. De plus, dans les unités à lit mobile, cette usure progressive a pour conséquence de perturber la circulation du catalyseur et de nécessiter l'appoint fréquent de catalyseur neuf.

Un catalyseur tel qu'un catalyseur de reformage doit donc répondre à un grand nombre d'exigences dont certaines peuvent apparaître comme étant contradictoires. Ce catalyseur doit tout d'abord présenter la plus grande activité possible permettant d'obtenir des rendements élevés, mais cette activité doit se conjuguer avec la plus grande sélectivité possible, c'est-à-dire que les réactions de craquage conduisant à des produits légers contenant de 1 à 4 atomes de carbone doivent être limitées.

D'autre part, le catalyseur doit présenter une grande stabilité vis-à-vis de sa désactivation par dépôt de coke ;

le catalyseur doit également avoir une excellente résistance à la dégradation lorsqu'il doit subir les conditions extrêmes régnant dans les opérations de régénération répétées qu'il doit subir.

Dans le cas du procédé de reformage continu mettant en oeuvre des réacteurs à lit mobile et comme cela est mentionné ci-dessus, les catalyseurs sont également soumis à une usure intense et progressive par frottement qui conduit à une diminution sensible de leur surface spécifique et à la formation de "fines" préjudiciables au fonctionnement de l'installation. Les catalyseurs actuellement disponibles, s'ils peuvent répondre à l'une ou à plusieurs de ces conditions, ne satisfont pas à l'ensemble des exigences mentionnées ci-dessus.

L'objet de l'invention est donc de fournir un catalyseur qui présente à la fois toutes les propriétés énumérées dans ce qui précède. Un autre objet de la présente invention est de fournir un procédé permettant de préparer ce catalyseur en utilisant des produits de départ couramment mis en oeuvre dans ce domaine de la technique, des étapes simples pouvant être aisément développées sur un plan industriel.

Ces objets et d'autres encore sont atteints conformément à la présente invention par un catalyseur comprenant :

- une matrice constituée d'un mélange d'alumine de transition η et d'alumine de transition γ, comprenant au moins 3 % en poids d'alumine de transition η ; et, exprimé en pourcentages en poids par rapport au catalyseur :

  - de 0,001 à 10 % d'au moins un métal dopant choisi dans le groupe constitué par le titane, le zirconium, le hafnium, le cobalt, le nickel et le zinc, les lanthanides et les métaux alcalins et alcalino-terreux,
  - de 0,10 à 15 % d'au moins un halogène choisi dans le groupe constitué par le fluor, le chlore, le brome et l'iode,
  - de 0,01 à 2,00 % d'au moins un métal noble de la famille du platine, et
  - de 0,005 à 10,00 % d'au moins un métal promoteur choisi dans le groupe constitué par l'étain, le germanium, l'indium, le gallium, le thallium, l'antimoine, le plomb, le rhénium, le manganèse, le chrome, le molybdène et le tungstène.

On sait que dans le domaine des catalyseurs et notamment dans le domaine des catalyseurs de reformage, l'alumine de transition de forme γ est la plus souvent employée (voir ci-dessus) . Selon l'invention, la matrice des catalyseurs est de manière surprenante, constituée d'un mélange d'alumine de transition η et d'alumine de transition γ.

Selon l'invention, le mélange d'alumine de transition γ et d'alumine de transition η, peut comprendre de 3,0 à 99 % de préférence de 3,0 à 84 % en poids d'alumine η, de préférence encore, ce mélange comprend de 3 à 70 % en poids, et mieux encore de 5 à 50 % en poids d'alumine de transition η, le complément à 100 % en poids du mélange étant de l'alumine de transition γ.

L'alumine de transition η est obtenue par calcination de bayérite sous air sec, à pression atmosphérique, entre 250 et 500°C et de préférence entre 300 et 450°C. La surface spécifique atteinte qui dépend de la température finale de calcination, se situe entre 300 et 500 m$^2$/g. L'alumine γ provient, elle, de la boehmite par calcination sous air à une température comprise entre 450 et 600°C. La surface spécifique de l'alumine γ obtenue est comprise entre 100 et 300 m$^2$/g.

Les structures de ces alumines de transition sont proches mais différenciables par la technique de diffraction des rayons X. Ces structures cristallines s'organisent selon un réseau cubique de type spinelle. Le paramètre cristallin de la forme η est a=7.90Å et c=7.79Å.

Le catalyseur ainsi préparé répond de manière surprenante à l'ensemble des exigences posées ci-dessus pour un catalyseur. La présence sur la matrice d'alumine d'au moins un métal dopant choisi dans le groupe constitué par le titane, le zirconium, le hafnium, le cobalt, le nickel, le zinc, les lanthanides et les métaux alcalinis et alcalino-terreux, a notamment pour effet de préserver la matrice d'alumine ou d'alumines de sa perte de surface spécifique lors. des différents traitements régénératifs subis par le catalyseur tandis que dans le même temps les performances catalytiques sont sensiblement maintenues, en particulier dans les réactions de reformage et de production d'aromatiques.

Selon l'invention, la matrice en alumines est modifiée par au moins un métal dopant choisi dans le groupe constitué par le titane, le zirconium, le hafnium, le cobalt, le nickel, le zinc, les lanthanides et les métaux alcalinis et alcalino-terreux.

Le groupe des lanthanides ou terres rares est constitué par les éléments de fa famille du lanthane dans le classement périodique de Mendeleef et dont les numéros atomiques sont compris entre 57 et 71. Citons, par exemple le cérium, le néodyme ou le praséodyme.

Selon l'invention, le catalyseur peut comprendre un ou plusieurs de ces métaux dopants et leur teneur totale dans le catalyseur, exprimée en pourcentages en poids par rapport au catalyseur est de 0,001 à 10 % en poids, de préférence de 0,005 à 5,0 % en poids, de préférence encore de 0,05 à 3 % en poids et mieux encore de 0,01 à 0,50 % en poids.

Selon un premier mode de réalisation, le ou les métal ou métaux dopant(s) est (sont) choisi(s) de préférence dans le groupe des lanthanides.

Selon un deuxième mode de réalisation, le ou les métal ou métaux dopant(s) est (sont) choisi(s) dans le groupe constitué par le titane, le zirconium, le hafnium, le cobalt, le nickel et le zinc.

Selon un troisième mode de réalisation, le métal ou les métaux dopant(s) est (sont) choisi(s) dans le groupe des métaux alcalins et alcalino-terreux. Lorsque le métal ou les métaux dopant(s) est (sont) choisi (s) dans le groupe des métaux alcalins et alcalino-terreux alors la teneur totale en métal dopant est de préférence der 0,001 à 8 % en poids, de préférence encore de 0,005 à 3 % en poids, mieux de 0,01 à 0, 3 % en poids par rapport au catalyseur.

De préférence, le métal dopant est le zirconium et/ou le titane, ou bien le métal dopant est le lanthane et/ou le cérium ou bien le métal dopant est le potassium et/ou le magnésium.

Le ou les halogène(s) utilisé(s) pour acidifier le support peuvent représenter au total 0,1 à 15 % en poids, de préférence 0,2 à 10 % en poids du catalyseur. De préférence, on utilise un seul halogène, en particulier le chlore.

Le catalyseur comprend également un ou plusieurs métaux promoteurs qui ont pour effet de promouvoir l'activité déshydrogénante du métal noble du groupe du platine et de limiter la perte de dispersion des atomes de métal noble à la surface de la matrice, qui est en partie responsable de la désactivation du catalyseur.

Les métaux promoteurs sont choisis en fonction du mode d'utilisation du catalyseur.

Ainsi, lorsque le catalyseur est destiné à être utilisé dans un procédé à lit fixe, le métal promoteur est choisi de préférence dans le groupe constitué par le rhénium, le manganèse, le chrome, le molybdène, le tungstène, l'indium et le thallium.

Lorsque le catalyseur doit être utilisé dans un procédé à lit mobile, le métal promoteur est de préférence choisi dans le groupe constitué par l'étain, le germanium, l'indium, l'antimoine, le plomb, le thallium et le gallium.

Parmi ceux-ci, on préfère de plus le rhénium pour les procédés à lit fixe et l'étain pour les procédés à lit mobile, car ceux-ci procurent les meilleurs effets de promotion de l'activité du catalyseur.

La teneur totale en métal (métaux) promoteur(s) est par rapport au catalyseur, de 0,005 à 10,00 % en poids, de préférence de 0,01 à 3,00% en poids, de préférence encore de 0,01 à 1 % en poids.

Lorsque le catalyseur ne contient qu'un seul métal promoteur, par exemple le rhénium ou l'étain, il est présent de préférence, à raison de 0,005 à 2,00 % en poids, de préférence encore de 0,005 à 1,5 % en poids, mieux de 0,01 à 0,9 % en poids et encore mieux de 0,01 à 0,8 % par rapport au catalyseur.

Lorsque le métal (les métaux dopants) est ou sont choisi (s) dans le groupe des métaux alcalins et alcalino-terreux, alors la teneur du seul métal promoteur est de préférence de 0,005 à 0,9 % en poids, de préférence encore de 0,01 à 0,8 % en poids.

Le catalyseur de l'invention comprend de plus au moins un métal noble de la famille du platine à une teneur de 0,01 à 2,00 % en poids, de préférence de 0,10 à 0,80 % en poids.

Les métaux nobles susceptibles d'être utilisés sont le platine, le palladium, l'iridium ; on préfère le platine.

Le catalyseur de l'invention peut être préparé par dépôt de ses différents constituants sur la matrice en alumines. Le dépôt de chaque constituant peut être effectué, en totalité ou partiellement sur l'une ou les deux alumines de la matrice avant ou après mise en forme de celle-ci. Les constituants peuvent être déposés séparément ou simultanément dans n'importe quel ordre.

On peut ainsi déposer les constituants du catalyseur sur les deux alumines ou sur l'une d'entre elles, de préférence sur l'alumine η avant d'effectuer le mélange des deux alumines et leur mise en forme.

On peut aussi effectuer le dépôt partiel ou total d'un ou de certains constituants sur les deux alumines ou l'une d'entre elles avant leur mélange, puis effectuer les autres dépôts après mélange des deux alumines, soit avant, soit après la mise en forme du mélange. Lorsqu'on dépose un ou plusieurs constituants avant de mélanger les deux alumines, on effectue, de préférence le dépôt de métal dopant sur l'alumine de transition η.

Toutefois, selon l'invention, on préfère généralement mélanger les deux alumines avant de déposer les constituants métalliques et le ou les halogènes.

Aussi, l'invention a également pour objet un procédé de préparation du catalyseur de l'invention, qui comprend les étapes suivantes :

a) préparation par mélange puis par mise en forme d'une matrice constituée d'un mélange d'alumine de transition η et d'alumine de transition γ, comprenant au moins 3% en poids d'alumine de transition η,

b) dépôt sur au moins une des alumines de transition γ et η des constituants suivants, dans les pourcentages en poids donnés ci-dessous, qui se rapportent au poids du catalyseur,

- de 0,001 à 10 %, de préférence de 0,005 à 5,0 % de préférence encore de 0,005 à 3 % en poids et mieux de 0,01 à 0,5 %, en poids d'au moins un métal dopant choisi dans le groupe constitué par le titane, le zirconium, le hafnium, le cobalt, le nickel, le zinc, les lanthanides et les métaux alcalins et alcalino-terreux.
- de 0,1 à 15 %, de préférence 0,2 à 10 %, en poids d'au moins un halogène choisi dans le groupe constitué par le fluor, le chlore, le brome et l'iode,

- de 0,01 à 2 % et de préférence de 0,10 à 0,80 % en poids d'au moins un métal noble de la famille du platine, et
- de 0,005 à 10 % et de préférence de 0,01 à 3,00 % en poids, de préférence de 0,01 à 1 % en poids d'au moins un métal promoteur choisi dans le groupe constitué par l'étain, le germanium, l'indium, le gallium, le thallium, l'antimoine, le plomb, le rhénium, le manganèse, le chrome, le molybdène et le tungstène ;

les étapes a) et b) pouvant être effectuées dans n'importe quel ordre, mais de préférence l'étape a) est effectuée avant l'étape b) et les dépôts de l'étape b) pouvant être réalisés en partie seulement avant l'étape a) et pouvant être effectués dans n'importe quel ordre.

Selon un mode préféré de mise en oeuvre de ce procédé, on prépare tout d'abord un support formé de la matrice d'alumines et d'au moins un métal dopant, puis on dépose sur celui-ci le ou les métaux promoteurs, le ou les halogènes, et le ou les métaux nobles de la famille du platine.

Dans ce cas, on peut déposer le ou les métaux dopants sur le mélange d'alumines, avant ou après mise en forme.

De préférence, on dépose le ou les métaux dopants après mise en forme de la matrice d'alumines.

Selon l'invention, on appelle support le produit obtenu dans le premier stade de ce procédé préféré, qui est constitué d'une matrice constituée d'un mélange d'alumine de transition η et d'alumine de transition γ, et d'au moins un métal dopant choisi dans le groupe constitué par le titane, le zirconium, le hafnium, le cobalt, le nickel, le zinc, les lanthanides et les métaux alcalins et alcalino-terreux, les quantités de métal dopant représentant en pourcentages en poids par rapport au support de 0,001 à 13,7 %, de préférence de 0,005 à 4,1 % et de préférence encore de 0,01 à 0,65 % en poids total de métal dopant par rapport au support.

Le dépôt des différents constituants du catalyseur peut être effectué par des techniques classiques, en phase liquide ou en phase gazeuse, à partir de composés précurseurs appropriés. Lorsque le dépôt est effectué sur la matrice en alumines mise en forme, les techniques employées peuvent être par exemple l'imprégnation à sec, l'imprégnation par excès de solution ou l'échange ionique. Cette opération est suivie si nécessaire d'un séchage et d'une calcination à une température de 300 à 900 °C, de préférence en présence d'oxygène.

Le dépôt du métal ou des métaux dopant(s) choisi(s) dans le groupe constitué par le titane, le zirconium, le hafnium, le cobalt, le nickel, le zinc, les lanthanides et les métaux alcalins et alcalino-terreux, peut être effectué par n'importe quelle technique, par exemple l'imprégnation à sec, l'imprégnation par excès de solution ou l'échange ionique et intervenir à n'importe quel stade du procédé de préparation du catalyseur. Lorsque ce dépôt est réalisé après la mise en forme de la matrice d'alumines, on utilise, de préférence, l'imprégnation en milieu aqueux par excès de solution, suivie d'un séchage pour éliminer le solvant d'imprégnation et d'une calcination sous air à une température comprise par exemple entre 300 et 900°C.

Ces métaux dopants peuvent être déposés par l'intermédiaire de composés tels que par exemple les oxydes, les halogénures, les oxyhalogénures, les nitrates, les carbonates, les sulfates, les acétates, les cyanures ou les oxalates desdits éléments. Dans le cas du zirconium, les alcoolates et les acétylacétonates sont également utilisables.

Le dépôt du ou des métaux nobles de la famille du platine peut être effectué également par des techniques classiques, notamment l'imprégnation à partir d'une solution aqueuse ou non contenant un sel ou un composé du métal noble. A titre d'exemple de sels ou de composés utilisables, on peut citer l'acide chloroplatinique, les composés ammoniaqués, le chloroplatinate d'ammonium, le dichlorure de platine dicarbonyle, l'acide hexahydroxyplatinique, le chlorure de palladium et le nitrate de palladium.

Dans le cas du platine, les composés ammoniaqués peuvent être par exemple les sels de platine IV hexamines de formule $Pt(NH_3)_6X_4$, les sels de platine IV halogénopentamines de formule $(PtX(NH_3)_5)X_3$, les sels de platine tétrahalogénodiamines de formule $PtX_4(NH_3)_2X$, les complexes de platine avec les halogènes-polycétones et les composés halogénés de formule $H(Pt(aca)_2X)$ dans lesquels l'élément X est un halogène choisi dans le groupe formé par le chlore, le fluor, le brome et l'iode, et de préférence le chlore, et le groupe aca représente le reste de formule $C_5H_7O_2$ dérivé de l'acétylacétone. L'introduction du métal noble de la famille du platine est de préférence effectuée par imprégnation à l'aide d'une solution aqueuse ou organique de l'un des composés organométalliques cités ci-dessus. Parmi les solvants organiques utilisables, on peut citer les hydrocarbures paraffiniques, naphténiques ou aromatiques, et les composés organiques halogénés ayant par exemple 1 à 12 atomes de carbone par molécule. On peut citer par exemple le n-heptane, le méthylcyclohexane, le toluène et le chloroforme. On peut aussi utiliser des mélanges de solvants.

Après introduction du métal noble, on effectue de préférence un séchage et une calcination, par exemple à une température de 400 à 700°C.

Le dépôt du ou des métaux nobles de la famille du platine peut intervenir à tout moment lors de la préparation du catalyseur. Il peut être effectué isolément ou simultanément au dépôt d'autres constituants, par exemple du ou des métaux promoteurs. Dans ce dernier cas, on peut utiliser pour l'imprégnation une solution contenant tous les constituants à introduire simultanément.

Le dépôt du ou des métaux promoteurs peut être effectué également par des techniques classiques à partir de composés précurseurs tels que les halogénures, les nitrates, les acétates, les tartrates, les citrates, les carbonates et les oxalates de ces métaux. Tout autre sel ou oxyde de ces métaux soluble dans l'eau, les acides, ou dans un autre solvant approprié, convient également comme précurseur. A titre d'exemples de tels précurseurs, on peut ainsi citer les rhénates, les chromates, les molybdates et les tungstates. On peut aussi introduire le ou les métaux promoteurs, par mélange d'une solution aqueuse de leur(s) composé(s) précurseur(s) avec une alumine ou les alumines avant mise en forme, suivie d'une calcination sous air à une température comprise entre 400 et 900°C.

L'introduction du ou des métaux promoteurs peut être également effectuée à l'aide d'une solution d'un composé organométallique desdits métaux dans un solvant organique. Dans ce cas, on effectue de préférence ce dépôt après celui du ou des métaux nobles de la famille du platine et calcination du solide, suivie éventuellement d'une réduction à l'hydrogène à haute température, par exemple entre 300 et 500°C. Les composés organométalliques sont choisis dans le groupe constitué par les complexes dudit métal promoteur, en particulier les complexes polycétoniques et les hydrocarbylmétaux tels que les alkyl, cycloalkyl, aryl, alkylaryl et arylalkyl métaux. On peut également employer des composés organohalogénés. On peut citer en particulier le tétrabutylétain dans le cas où le métal promoteur est l'étain, le tétraéthylplomb dans le cas où le métal promoteur est le plomb et le triphénylindium dans le cas où le métal promoteur est l'indium. Le solvant d'imprégnation peut être choisi dans le groupe constitué par les hydrocarbures paraffiniques, naphténiques ou aromatiques contenant de 6 à 12 atomes de carbone par molécule et les composés organiques halogénés contenant de 1 à 12 atomes de carbone par molécule. On peut citer par exemple le n-heptane, le méthylcyclohexane et le chloroforme. On peut aussi utiliser des mélanges des solvants définis ci-dessus.

L'halogène, par exemple le chlore, peut être introduit dans le catalyseur en même temps qu'un autre constituant métallique, par exemple dans les cas où on utilise un halogénure comme composé précurseur du métal de la famille du platine, du métal promoteur ou du métal dopant. On peut aussi effectuer cette introduction par imprégnation au moyen d'une solution aqueuse contenant un acide ou un sel halogéné. Par exemple, le chlore peut être déposé en utilisant une solution d'acide chlorhydrique. On peut encore effectuer l'introduction de chlore par calcination du catalyseur à une température allant par exemple de 400 à 900°C, en présence d'un composé organique contenant l'halogène comme par exemple $CCl_4$, $CH_2Cl_2$ et $CH_3Cl$.

Bien entendu, on peut introduire simultanément au moins deux constituants du catalyseur, par exemple à partir d'une solution comprenant des composés précurseurs de ceux-ci. On peut aussi introduire les constituant successivement dans n'importe quel ordre, à partir de solutions distinctes. Dans ce dernier cas, on peut procéder à des séchages et/ou des calcinations intermédiaires.

La mise en forme de la matrice d'alumine ou en mélange d'alumines peut être réalisée en utilisant les techniques de mise en forme des catalyseurs connues de l'homme de l'art telles que par exemple : l'extrusion, la coagulation en goutte, la dragéification, le séchage par atomisation ou encore le pastillage.

De manière préférée, un procédé de préparation selon l'invention, que nous détaillons ci-après, comprend les étapes successives suivantes :

a) mise en forme de la matrice constituée d'un mélange d'alumine γ et d'alumine η,
b) dépôt sur cette matrice d'au moins un métal dopant choisi dans le groupe constitué par le titane, le zirconium, le hafnium, le cobalt, le nickel, le zinc, les lanthanides et les métaux alcalins et alcalino-terreux.
c) dépôt d'au moins un métal promoteur choisi parmi l'étain, le germanium, l'indium, le gallium, le thallium, l'antimoine, le plomb, le rhénium, le manganèse, le chrome, le molybdène et le tungstène,
d) introduction d'au moins un élément choisi dans le groupe constitué par le fluor, le chlore, le brome et l'iode, et
e) dépôt d'au moins un métal noble de la famille du platine.

Après mise en forme de la matrice et dépôt de tous les constituants, on peut procéder à un traitement thermique final entre 300 et 1000°C, qui peut ne comporter qu'une seule étape à une température de 400 à 900°C de préférence, et sous atmosphère contenant de l'oxygène, et de préférence en présence d'oxygène libre ou d'air. Ce traitement correspond généralement au séchage-calcinatiion suivant le dépôt du dernier constituant.

Après mise en forme de la matrice et dépôt de tous les constituants, on effectue de préférence un traitement thermique complémentaire qui peut être réalisé à une température de 300 à 1000°C, de préférence de 400 à 700°C, dans une atmosphère gazeuse contenant de la vapeur d'eau et éventuellement un halogène tel que le chlore.

Ce traitement peut être effectué en lit traversé par un courant de gaz ou en atmosphère statique. De préférence, l'atmosphère gazeuse contient de l'eau et éventuellement au moins un halogène. La teneur molaire en eau est comprise entre 0,05 et 100 %, de préférence entre 1 et 50 %. La teneur molaire en halogène est comprise entre 0 et 20 %, de préférence entre 0 et 10 %, et de préférence encore entre 0 et 2 %. La durée de ce traitement est variable en fonction des conditions de température, pression partielle d'eau et quantité de catalyseur. Cette valeur est avantageusement comprise entre une minute et 30 heures, de préférence de 1 à 10 heures. L'atmosphère gazeuse utilisée est par exemple à base d'air, d'oxygène, ou d'un gaz inerte tel que l'argon ou l'azote.

Le rôle de ce traitement à haute température en présence d'eau est important. Comme cela est montré dans les exemples décrits ci-après, la présence d'au moins un élément du groupe constitué par le titane, le zirconium, le hafnium, le cobalt, le nickel, le zinc, les lanthanides et les métaux alcalins et alcalino-terreux préserve la matrice d'alumines de sa perte de surface spécifique lors des différents traitements régénératifs. De façon inattendue, un traitement thermique sévère en présence d'eau et éventuellement d'halogène appliqué à ce type de catalyseur contenant au moins un élément du groupe constitué par le titane, le zirconium, le hafnium, le cobalt, le nickel, le zinc, les lanthanides et les métaux alcalins et alcalino-terreux, a pour effet, non seulement de maintenir la moindre perte de surface spécifique, mais permet de plus d'améliorer significativement les performances catalytiques dans les réactions de reformage et de production d'aromatiques, par rapport aux catalyseurs de l'art antérieur préparés selon des procédés n'incluant pas l'étape finale de traitement à haute température en présence d'eau et d'au moins un halogène, de préférence le chlore.

A l'issue de la préparation selon l'invention, le catalyseur calciné peut avantageusement subir un traitement d'activation sous hydrogène à haute température, par exemple comprise entre 300 et 550°C. La procédure de traitement sous hydrogène consiste par exemple en une montée lente de la température sous courant d'hydrogène jusqu'à la température maximale de réduction, comprise généralement entre 300 et 550°C et de préférence entre 350 et 450°C, suivie d'un maintien à cette température pour une durée allant en général de 1 à 6 heures.

Le catalyseur de l'invention peut être utilisé en particulier dans les réactions de transformation d'hydrocarbures, et plus particulièrement dans les procédés de reformage des essences et de production d'aromatiques.

Les procédés de reformage permettent d'augmenter l'indice d'octane des fractions essences provenant de la distillation du pétrole brut et/ou d'autres procédés de raffinage.

Les procédés de production d'aromatiques fournissent les bases (benzène, toluène et xylène) utilisables en pétrochimie. Ces procédés revêtent un intérêt supplémentaire en contribuant à la production de quantités importantes d'hydrogène indispensable pour les procédés d'hydrotraitement de la raffinerie.

Ces deux procédés se différencient par le choix de conditions opératoires et la composition de la charge.

La charge typique traitée par ces procédés contient des hydrocarbures paraffiniques, naphténiques et aromatiques contenant de 5 à 12 atomes de carbone par molécule. Cette charge est définie, entre autres, par sa densité et sa composition pondérale.

Pour mettre en oeuvre ces procédés, on met en contact la charge d'hydrocarbures avec le catalyseur de la présente invention, à une température de 400 à 700°C, en utilisant la technique du lit mobile ou du lit fixe.

Généralement le débit massique de charge traitée par unité de masse de catalyseur est de 0,1 à 10 kg/kg.h. La pression opératoire peut être fixée entre la pression atmosphérique et 4 MPa.

Une partie de l'hydrogène produit est recyclé selon un taux de recyclage molaire allant de 0,1 à 8. Le taux est le rapport débit d'hydrogène recyclé sur débit de charge.

D'autres caractéristiques et avantages de l'invention apparaîtront mieux à la lecture des exemples qui suivent, donnés bien entendu à titre illustratif et non limitatif.

L'invention va maintenant être décrite dans les exemples de réalisation suivants donnés à titre illustratif et non limitatif.

**Exemple 1** : Préparation d'un catalyseur selon l'invention comprenant une matrice formée d'un mélange d'alumine γ et d'alumine η sur laquelle sont déposées du titane, du platine, du rhénium et du chlore.

a) mise en forme de la matrice en alumine

La matrice est préparée par mélange mécanique d'une poudre d'alumine γ de surface spécifique égale à 220 m$^2$/g et d'une poudre d'alumine η de surface spécifique égale à 320 m$^2$/g qui avait été préparée par calcination de bayérite. La proportion d'alumine η est de 30 % en poids. Le mélange est ensuite mis en forme par extrusion. La matrice extrudée est calciné sous un courant d'air sec à 520°C pendant 3 heures.

b) dépôt de titane

Après refroidissement, la matrice obtenue dans l'étape a) est mise au contact d'une solution aqueuse d'oxalate de titane décahydraté $Ti_2(C_2O_4)_3$, $10H_2O$. La concentration de cette solution est de 14,1 g de titane par litre. Cette mise au contact est réalisée à température ambiante pendant 1 h. Puis les extrudés imprégnés sont séchés à 120°C pendant 15 h et calcinés à 530°C sous un courant d'air humide pendant 20 h. La pression partielle d'eau est égale à 0,07 MPa.

c)d)e) Dépôt de platine, de rhénium et de chlore.

On effectue un dépôt de platine de rhénium et de chlore sur une partie du support obtenu dans l'étape b).

Le platine est déposé lors d'une première imprégnation du support par une solution aqueuse contenant par litre :

> 8,20 g de chlore sous forme d'HCl,
> 1,00 g de platine sous forme d'H$_2$PtCl$_6$.

La solution est laissée au contact du support pendant 2 h. Après essorage et séchage pendant 4 h à 120°C, le support imprégné est calciné à 530°C pendant 3 h sous un courant d'air sec. Puis le rhénium est déposé par une deuxième imprégnation par une solution aqueuse contenant par litre :

> 4,20 G de chlore sous forme d'HCl,
> 1,50 g de rhénium sous forme de ReCl$_3$.

Après séchage, le support imprégné est calciné à 530°C pendant 2 h sous un courant d'air sec.

f) traitement thermique en présence d'eau et de chlore.

Le produit obtenu après les étapes c) d) e) ci-dessus est traité à 510°C pendant 2 h sous un courant de 2000 dm$^3$/h d'air pour 1 kg de solide. Cet air contient de l'eau et du chlore injectés dans une zone de préchauffage située en amont du lit de solide. Les concentrations molaires en eau et chlore sont respectivement égales à 1 % et 0,05 %.

**Exemple 2 :** Préparation d'un catalyseur selon l'invention comprenant une matrice d'alumine γ et d'alumine η sur laquelle sont déposés du zirconium, du platine, du rhénium et du chlore.

a) Mise en forme de la matrice

La matrice d'alumine est préparée de la même manière que dans l'exemple 1, étape a) par mélange mécanique d'une poudre d'alumine γ et d'une poudre d'alumine η extrusion et calcination.

b) Dépôt de zirconium

La matrice obtenue dans l'étape a) est mise au contact d'une solution aqueuse de chlorure de zirconyle ZrOCl$_2$, 8H$_2$O. La concentration de cette solution est de 26,7 g de zirconium par litre. Cette mise au contact est réalisée à température ambiante pendant 2 h. Puis les extrudés sont séchés à 120°C pendant 15 h et calcinés à 530°C sous un courant d'air sec pendant 2 h.

c)d)e) Dépôt de platine, de rhénium et de chlore.

Le dépôt de platine, de rhénium et de chlore est effectué sur le produit obtenu dans l'étape b) ci-dessus exactement de la même manière que dans l'exemple 1 étape c).

f) Traitement thermique en présence d'eau et de chlore.

Le produit obtenu à l'issue des étapes c)d)e) ci-dessus est traité exactement de la même manière que dans l'exemple 2.

**Exemple 3 (comparatif)**

Dans cet exemple, on suit sensiblement le même mode opératoire que dans l'Exemple 1, mais dans l'étape a) on utilise uniquement de l'alumine γ, on ne dépose pas de titane ou de zirconium et on ne réalise pas de traitement hydrothermique final.

a) Mise en forme de la matrice

On prépare matrice par extrusion d'une poudre d'alumine γ dont la surface spécifique est de 220 m$^2$/g. La matrice extrudée est ensuite calcinée dans un courant d'air sec à 520°C pendant 3 h.

b) Dépôt de platine, de rhénium et chlore

Le dépôt de platine, de rhénium et de chlore est effectué sur la matrice obtenue à l'issue de l'étape a) ci-dessus exactement de la même manière que dans l'étape "c)d)e)" des exemples 1) et 2).

Les caractéristiques des catalyseurs ainsi préparées sont regroupées dans le tableau I ci-dessous.

TABLEAU I

| Catalyseur | proportion alumine η (% poids) | teneur en platine (% poids) | teneur en rhénium (% poids) | teneur en chlore (% poids) | teneur en titane (% poids) | teneur en zirconium (% poids | surface spécifique ($m^2$/g) |
|---|---|---|---|---|---|---|---|
| Ex. 3 | 0 | 0,23 | 0,25 | 1,12 | 0 | 0 | 216 |
| Ex. 1 | 30 | 0,22 | 0,22 | 1,09 | 0,085 | 0 | 245 |
| Ex. 2 | 30 | 0,24 | 0,23 | 1,10 | 0 | 0,13 | 243 |

**Exemple 4 :**

Performance des catalyseurs

Les catalyseurs préparés ci-dessus dans les exemples 1, 2 et 3 ont été testés en transformation d'une charge dont les caractéristiques sont les suivantes

| masse volumique à 20°C | 0,742 kg/$dm^3$ |
|---|---|
| indice d'octane recherche | -41 |
| teneur en paraffines | 52,2 % poids |
| teneur en naphtènes | 32,4 % poids |
| teneur en aromatiques | 15,4 % poids |

Les conditions opératoires suivantes ont été utilisées :

| température | 485°C |
|---|---|
| pression totale | 1,3 MPa |
| débit massique de charge (en kg.$h^{-1}$) par kilogramme de catalyseur | 1,0 $h^{-1}$ |

Les performances des catalyseurs sont reportées dans le tableau II ci-dessous, et sont exprimées au travers des rendements pondéraux et de l'indice d'octane recherche du reformat.

TABLEAU II

| Catalyseur | rendement reformat (% poids) | rendement hydrogène (% poids) | rendement en aromatiques (% poids) | rendement en C4 (%poids) | $\frac{C4}{aromatiques}$ |
|---|---|---|---|---|---|
| Exemple 3 | 85,7 | 3,0 | 59,1 | 11,3 | 0,19 |
| Exemple 1 | 86,5 | 3,1 | 59,5 | 10,4 | 0,18 |
| Exemple 2 | 87,1 | 3,2 | 59,7 | 9,7 | 0,16 |

Si l'on compare les performances des catalyseurs des exemples 1 et 3 d'une part et celles des catalyseurs des exemples 2 et 3 d'autre part, on constate que les catalyseurs des exemples 1 et 2 selon l'invention ont des performances nettement améliorées par rapport au catalyseur de l'exemple 3 qui représente l'art antérieur.

En effet, les rendements en produits légers de craquage C4 obtenus lors du test des deux catalyseurs des exemples 1 et 2 selon l'invention, sont très significativement inférieurs à ceux observés sur le catalyseur comparatif de l'exemple 3.

Ainsi, on s'aperçoit que le rapport des rendements en produits de craquage C4 sur les rendements en composés aromatiques, dénommé C4/aromatiques dans le tableau ci-dessus, est inférieur pour les deux catalyseurs des exemples 1 et 2 selon l'invention. La sélectivité des catalyseurs vis-à-vis des produits aromatiques recherchés, sera d'autant plus forte que ce rapport est faible.

Les catalyseurs des exemples 1 et 2 selon l'invention, contenant en plus par rapport au catalyseur comparatif de l'exemple 3 de l'alumine η, du titane et du zirconium respectivement, et ayant subi avantageusement un traitement thermique en présence d'eau et de chlore, présentent des caractéristiques améliorées par rapport au catalyseur comparatif de l'exemple 3, notamment des sélectivités en produits de craquage plus faibles, et donc des sélectivités en produits aromatiques améliorées.

**Exemple 1A :** Préparation d'un catalyseur selon l'invention comprenant une matrice formée d'un mélange d'alumine γ et d'alumine η sur laquelle sont déposées du lanthane, du platine, du rhénium et du chlore.

a) <u>mise en forme de la matrice en alumine</u>

La matrice est préparée par mélange mécanique d'une poudre d'alumine γ de surface spécifique égale à 220 $m^2/g$ et d'une poudre d'alumine η de surface spécifique égale à 320 $m^2/g$ qui avait été préparée par calcination de bayérite. La proportion d'alumine η est de 40 % en poids. Le mélange est ensuite mis en forme par extrusion. La matrice extrudée est calciné sous un courant d'air sec à 520°C pendant 3 heures.

b) <u>dépôt de lanthane</u>

Après refroidissement, la matrice obtenue dans l'étape a) est mise au contact d'une solution aqueuse de nitrate de lanthane hexahydraté $La(NO_3)_2, 6H_2O$. La concentration de cette solution est de 32,0 g de lanthane par litre. Cette mise au contact est réalisée à température ambiante pendant 1 h. Puis le support ainsi imprégné est séché à 120°C pendant 15 h et calciné à 530°C sous un courant d'air sec pendant 2 h.

c)d)e) <u>Dépôt de platine, de rhénium et de chlore.</u>

On effectue un dépôt de platine de rhénium et de chlore sur une partie du support obtenu dans l'étape b).

Le platine est déposé lors d'une première imprégnation du support par une solution aqueuse contenant par litre :

8,20 g de chlore sous forme d'HCl,
1,00 g de platine sous forme d'$H_2PtCl_6$.

La solution est laissée au contact du support pendant 2 h. Après essorage et séchage pendant 4 h à 120°C, le support imprégné est calciné à 530°C pendant 3 h sous un courant d'air sec. Puis le rhénium est déposé par une deuxième imprégnation par une solution aqueuse contenant par litre :

4,20 g de chlore sous forme d'HCl,
1,50 g de rhénium sous forme de $ReCl_3$.

Après séchage, le support imprégné est calciné à 530°C pendant 2 h sous un courant d'air sec.

f) <u>traitement thermique en présence d'eau et de chlore.</u>

Le produit obtenu après les étapes c) d) e) ci-dessus est traité à 510°C pendant 2 h sous un courant de 2000 $dm^3/h$ d'air pour 1 kg de solide. Cet air contient de l'eau et du chlore injectés dans une zone de préchauffage située en amont du lit de solide. Les concentrations molaires en eau et chlore sont respectivement égales à 1 % et 0,05 %.

**Exemple 2 A:** Préparation d'un catalyseur selon l'invention comprenant une matrice d'alumine γ et d'alumine η sur laquelle sont déposés du cérium, du platine, du rhénium et du chlore.

a) <u>Mise en forme de la matrice</u>

La matrice d'alumine est préparé de la même manière que dans l'exemple 1A, étape a) par mélange mécanique d'une poudre d'alumine γ et d'une poudre d'alumine η extrusion et calcination.

b) Dépôt de cérium

La matrice obtenue dans l'étape a) est mise au contact d'une solution aqueuse de nitrate de cérium hexahydraté $Ce(NO_3)_3$, $6H_2O$. La concentration de cette solution est de 32,3 g de cérium par litre. Cette mise au contact est réalisée à température ambiante pendant 1 h. Puis les extrudés sont séchés à 120°C pendant 15 h et calcinés à 530°C sous un courant d'air sec pendant 2 h.

c)d)e) Dépôt de platine, de rhénium et de chlore.

Le dépôt de platine, de rhénium et de chlore est effectué sur le produit obtenu dans l'étape b) ci-dessus exactement de la même manière que dans l'exemple 1 étape c).

f) Traitement thermique en présence d'eau et de chlore.

Le produit obtenu à l'issue des étapes c)d)e) ci-dessus est traité exactement de la même manière que dans l'exemple 2A.

**Exemple 3A (comparatif)**

Dans cet exemple, on suit sensiblement le même mode opératoire que dans l'Exemple 1A, mais dans l'étape a) on utilise uniquement de l'alumine γ, on ne dépose pas de lanthane ou de cérium et on ne réalise pas de traitement hydrothermique final.

a) Mise en forme de la matrice

On prépare matrice par extrusion d'une poudre d'alumine γ dont la surface spécifique est de 220 $m^2/g$. La matrice extrudée est ensuite calcinée dans un courant d'air sec à 520°C pendant 3 h.

b) Dépôt de platine, de rhénium et chlore

Le dépôt de platine, de rhénium et de chlore est effectué sur la matrice obtenue à l'issue de l'étape a) ci-dessus exactement de la même manière que dans l'étape "c)d)e)" des exemples 1A) et 2A).
Les caractéristiques des catalyseurs ainsi préparées sont regroupées dans le tableau I ci-dessous.

TABLEAU IA

| Catalyseur | proportion alumine η (% poids) | teneur en platine (% poids) | teneur en rhénium (% poids) | teneur en chlore (% poids) | teneur en lanthane (% poids) | teneur en cérium (% poids | surface spécifique ($m^2/g$) |
|---|---|---|---|---|---|---|---|
| Ex. 3A | 0 | 0,23 | 0,35 | 1,12 | 0 | 0 | 216 |
| Ex. 1A | 40 | 0,21 | 0,32 | 1,15 | 0,21 | 0 | 245 |
| Ex. 2A | 40 | 0,22 | 0,34 | 1,14 | 0 | 0,23 | 243 |

**Exemple 4A :**

Performance des catalyseurs

Les catalyseurs préparés ci-dessus dans les exemples 1A, 2A et 3A ont été testés en transformation d'une charge dont les caractéristiques sont les suivantes

| masse volumique à 20°C | 0,742 kg/dm³ |
|---|---|
| indice d'octane recherche | ~41 |
| teneur en paraffines | 52,2 % poids |
| teneur en naphtènes | 32,4 % poids |
| teneur en aromatiques | 15,4 % poids |

**EP 0 832 168 B1**

Les conditions opératoires suivantes ont été utilisées :

| température | 495°C |
| pression totale | 1,5 MPa |
| débit massique de charge (en kg.h$^{-1}$) par kilogramme de catalyseur | 2,0 h$^{-1}$ |

Les performances des catalyseurs sont reportées dans le tableau IIA ci-dessous, et sont exprimées au travers des rendements pondéraux et de l'indice d'octane recherche du reformat.

TABLEAU IIA

| Catalyseur | rendement reformat (% poids) | rendement hydrogène (% poids) | rendement en aromatiques (% poids) | rendement en C4 (%poids) | $\frac{C4}{aromatiques}$ |
|---|---|---|---|---|---|
| Exemple 3A | 84,2 | 3,0 | 58,5 | 12,8 | 0,22 |
| Exemple 1A | 85,6 | 3,2 | 58,3 | 11,2 | 0,19 |
| Exemple 2A | 85,0 | 3,2 | 58,4 | 11,8 | 0,20 |

Si l'on compare les performances des catalyseurs des exemples 1A et 3A d'une part et celles des catalyseurs des exemples 2A et 3A d'autre part, on constate que les catalyseurs des exemples 1A et 2A selon l'invention ont des performances nettement améliorées par rapport au catalyseur de l'exemple 3A qui représente l'art antérieur.

En effet, les rendements en produits légers de craquage C4 obtenus lors du test des deux catalyseurs des exemples 1A et 2A selon l'invention, sont très significativement inférieurs à ceux observés sur le catalyseur comparatif de l'exemple 3A.

Ainsi, on s'aperçoit que le rapport des rendements en produits de craquage C4 sur les rendements en composés aromatiques, dénommé C4/aromatiques dans le tableau ci-dessus, est inférieur pour les deux catalyseurs des exemples 1A et 2A selon l'invention. La sélectivité des catalyseurs vis-à-vis des produits aromatiques recherchés, sera d'autant plus forte que ce rapport est faible.

Les catalyseurs des exemples 1A et 2A selon l'invention, contenant en plus par rapport au catalyseur comparatif de l'exemple 3A de l'alumine η, du lanthane et du cérium respectivement, et ayant subi avantageusement un traitement thermique en présence d'eau et de chlore, présentent des caractéristiques améliorées par rapport au catalyseur comparatif de l'exemple 3A, notamment des sélectivités en produits de craquage plus faibles, et donc des sélectivités en produits aromatiques améliorées.

**Exemple 1B** : Préparation d'un catalyseur selon l'invention comprenant une matrice formée d'un mélange d'alumine γ et d'alumine η sur laquelle sont déposées du potassium, du platine, du rhénium et du chlore.

a) mise en forme de la matrice en alumine

La matrice est préparée par mélange mécanique d'une poudre d'alumine γ de surface spécifique égale à 220 m$^2$/g et d'une poudre d'alumine η de surface spécifique égale à 320 m$^2$/g qui avait été préparée par calcination de bayérite. La proportion d'alumine η est de 30 % en poids. Le mélange est ensuite mis en forme par extrusion. La matrice extrudée est calciné sous un courant d'air sec à 520°C pendant 3 heures.

b) dépôt de potassium

Après refroidissement, la matrice obtenue dans l'étape a) est mise au contact d'une solution aqueuse de carbonate de potassium K$_2$CO$_3$. La concentration de cette solution est de 12,8 g de potassium par litre. Cette mise au contact est réalisée à température ambiante pendant 1 h. Puis les extrudés imprégnés sont séchés à 120°C pendant 15 h et calcinés à 530°C sous un courant d'air sec pendant 20 h.

c)d)e) Dépôt de platine, de rhénium et de chlore.

On effectue un dépôt de platine de rhénium et de chlore sur une partie du support obtenu dans l'étape b).

Le platine est déposé lors d'une première imprégnation du support par une solution aqueuse contenant par litre :

8,20 g de chlore sous forme d'HCl,
1,00 g de platine sous forme d'$H_2PtCl_6$.

La solution est laissée au contact du support pendant 2 h. Après essorage et séchage pendant 4 h à 120°C, le support imprégné est calciné à 530°C pendant 3 h sous un courant d'air sec. Puis le rhénium est déposé par une deuxième imprégnation par une solution aqueuse contenant par litre :

4,20 G de chlore sous forme d'HCl,
1,50 g de rhénium sous forme de $ReCl_3$.

Après séchage, le support imprégné est calciné à 530°C pendant 2 h sous un courant d'air sec.

f) traitement thermique en présence d'eau et de chlore.

Le produit obtenu après les étapes c) d) e) ci-dessus est traité à 510°C pendant 2 h sous un courant de 2000 $dm^3$/h d'air pour 1 kg de solide. Cet air contient de l'eau et du chlore injectés dans une zone de préchauffage située en amont du lit de solide. Les concentrations molaires en eau et chlore sont respectivement égales à 1 % et 0,05 %.

**Exemple 2B :** Préparation d'un catalyseur selon l'invention comprenant une matrice d'alumine γ et d'alumine η sur laquelle sont déposés du magnésium, du platine, du rhénium et du chlore.

a) Mise en forme de la matrice

La matrice d'alumine est préparée de la même manière que dans l'exemple 1B, étape a) par mélange mécanique d'une poudre d'alumine γ et d'une poudre d'alumine η extrusion et calcination.

b) Dépôt de magnésium

La matrice obtenue dans l'étape a) est mise au contact d'une solution aqueuse de nitrate de magnésium hexahydraté $Mg(NO_3)_2$, $6H_2O$. La concentration de cette solution est de 8,0 g de magnésium par litre. Cette mise au contact est réalisée à température ambiante pendant 2 h. Puis les extrudés sont séchés à 120°C pendant 15 h et calcinés à 530°C sous un courant d'air sec pendant 2 h.

c)d)e) Dépôt de platine, de rhénium et de chlore.

Le dépôt de platine, de rhénium et de chlore est effectué sur le produit obtenu dans l'étape b) ci-dessus exactement de la même manière que dans l'exemple 1B étape c).

f) Traitement thermique en présence d'eau et de chlore.

Le produit obtenu à l'issue des étapes c)d)e) ci-dessus est traité exactement de la même manière que dans l'exemple 2B.

**Exemple 3B (comparatif)**

Dans cet exemple, on suit sensiblement le même mode opératoire que dans l'Exemple 1B, mais dans l'étape a) on utilise uniquement de l'alumine γ, on ne dépose pas de potassium ou de magnésium et on ne réalise pas de traitement hydrothermique final.

a) Mise en forme de la matrice

On prépare matrice par extrusion d'une poudre d'alumine γ dont la surface spécifique est de 220 $m^2$/g. La matrice extrudée est ensuite calcinée dans un courant d'air sec à 520°C pendant 3 h.

b) Dépôt de platine, de rhénium et chlore

Le dépôt de platine, de rhénium et de chlore est effectué sur la matrice obtenue à l'issue de l'étape a) ci-dessus exactement de la même manière que dans l'étape "c)d)e)" des exemples 1B) et 2B).

Les caractéristiques des catalyseurs ainsi préparées sont regroupées dans le tableau IB ci-dessous.

TABLEAU IB

| Catalyseur | proportion alumine η (% poids) | teneur en platine (% poids) | teneur en rhénium (% poids) | teneur en chlore (% poids) | teneur en potassium (% poids) | teneur en magnésium (% poids | surface spécifique (m²/g) |
|---|---|---|---|---|---|---|---|
| Ex. 3B | 0 | 0,23 | 0,25 | 1,12 | 0 | 0 | 216 |
| Ex. 1B | 30 | 0,24 | 0,26 | 1,16 | 0,071 | 0 | 245 |
| Ex. 2B | 30 | 0,21 | 0,22 | 1,11 | 0 | 0,032 | 243 |

**Exemple 4B :**

**Performance des catalyseurs**

Les catalyseurs préparés ci-dessus dans les exemples 1B, 2B et 3B ont été testés en transformation d'une charge dont les caractéristiques sont les suivantes

| masse volumique à 20°C | 0,742 kg/dm³ |
|---|---|
| indice d'octane recherche | ~41 |
| teneur en paraffines | 52,2 % poids |
| teneur en naphtènes | 32,4 % poids |
| teneur en aromatiques | 15,4 % poids |

Les conditions opératoires suivantes ont été utilisées :

| température | 485°C |
|---|---|
| pression totale | 1,5 MPa |
| débit massique de charge (en kg.h$^{-1}$) par kilogramme de catalyseur | 1,5 h$^{-1}$ |

Les performances des catalyseurs sont reportées dans le tableau IIB ci-dessous, et sont exprimées au travers des rendements pondéraux et de l'indice d'octane recherche du reformat.

TABLEAU IIB

| Catalyseur | rendement reformat (% poids) | rendement hydrogène (% poids) | rendement en aromatiques (% poids) | rendement en C4 (%poids) | $\frac{C4}{aromatiques}$ |
|---|---|---|---|---|---|
| Exemple 3 | 85,3 | 3,0 | 59,3 | 11,7 | 0,20 |
| Exemple 1 | 86,1 | 3,2 | 59,9 | 10,7 | 0,18 |
| Exemple 2 | 86,8 | 3,3 | 59,7 | 9,9 | 0,17 |

Si l'on compare les performances des catalyseurs des exemples 1B et 3B d'une part et celles des catalyseurs des exemples 2B et 3B d'autre part, on constate que les catalyseurs des exemples 1B et 2B selon l'invention ont des performances nettement améliorées par rapport au catalyseur de l'exemple 3B qui représente l'art antérieur.

En effet, les rendements en produits légers de craquage C4 obtenus lors du test des deux catalyseurs des exemples 1B et 2B selon l'invention, sont très significativement inférieurs à ceux observés sur le catalyseur comparatif de l'exemple 3B.

Ainsi, on s'aperçoit que le rapport des rendements en produits de craquage C4 sur les rendements en composés aromatiques, dénommé C4/aromatiques dans le tableau ci-dessus, est inférieur pour les deux catalyseurs des exemples 1B et 2B selon l'invention. La sélectivité des catalyseurs vis-à-vis des produits aromatiques recherchés, sera d'autant plus forte que ce rapport est faible.

Les catalyseurs des exemples 1B et 2B selon l'invention, contenant en plus par rapport au catalyseur comparatif de l'exemple 3B de l'alumine η, du potassium et du magnésium respectivement, et ayant subi avantageusement un traitement thermique en présence d'eau et de chlore, présentent des caractéristiques améliorées par rapport au catalyseur comparatif de l'exemple 3B, notamment des sélectivités en produits de craquage plus faibles, et donc des sélectivités en produits aromatiques améliorées.

**Revendications**

1.  Catalyseur comprenant :

    -   une matrice constituée d'un mélange d'alumine de transition η et d'alumine de transition γ, comprenant au moins 3 % en poids d'alumine de transition η ; et, exprimé en pourcentages en poids par rapport au catalyseur :

    -   de 0,001 à 10 % d'au moins un métal dopant choisi dans le groupe constitué par le titane, le zirconium, le hafnium, le cobalt, le nickel et le zinc, les lanthanides et les métaux alcalins et alcalino-terreux,
    -   de 0,10 à 15 % d'au moins un halogène choisi dans le groupe constitué par le fluor, le chlore, le brome et l'iode,
    -   de 0,01 à 2,00 % d'au moins un métal noble de la famille du platine, et
    -   de 0,005 à 10,00 % d'au moins un métal promoteur choisi dans le groupe constitué par l'étain, le germanium, l'indium, le gallium, le thallium, l'antimoine, le plomb, le rhénium, le manganèse, le chrome, le molybdène et le tungstène.

2.  Catalyseur selon la revendication 1, dans lequel la matrice comprend de 3,0 à 99 % en poids d'alumine de transition η.

3.  Catalyseur selon la revendication 1, dans lequel la matrice comprend de 3,0 à 84 % en poids d'alumine de transition η.

4.  Catalyseur selon la revendication 1, dans lequel la matrice comprend de 3,0 à 70 % en poids d'alumine de transition η.

5.  Catalyseur selon la revendication 1, dans lequel la matrice comprend de 5 à 50 % en poids d'alumine de transition η.

6.  Catalyseur selon l'une quelconque des revendications 1 à 5, dans lequel la teneur en halogène est de 0,2 à 10 % en poids.

7.  Catalyseur selon l'une quelconque des revendications 1 à 6, dans lequel la teneur totale en métal noble est de 0,1 à 0,8 % en poids.

8.  Catalyseur selon l'une quelconque des revendications 1 à 7, dans lequel le métal promoteur est choisi dans le groupe formé par l'étain, le germanium, l'indium, l'antimoine, le plomb, le thallium, le gallium et leurs mélanges.

9.  Catalyseur selon l'une quelconque des revendications 1 à 8 dans lequel le métal promoteur est l'étain.

10. Catalyseur selon l'une quelconque des revendications 1 à 7, dans lequel le métal promoteur du catalyseur est choisi dans le groupe formé par le rhénium, le manganèse, le chrome, le molybdène, le tungstène, l'indium, le thallium et leurs mélanges.

11. Catalyseur selon la revendication 10, dans lequel le métal promoteur du catalyseur est le rhénium.

12. Catalyseur selon l'une quelconque des revendications 1 à 11, **caractérisé en ce que** ledit au moins un métal dopant du catalyseur est choisi dans le groupe des lanthanides.

13. Catalyseur selon l'une quelconque des revendications 1 à 11, **caractérisé en ce que** ledit au moins un métal dopant du catalyseur est choisi dans le groupe constitué par le titane, le zirconium, le hafnium, le cobalt, le nickel et le zinc.

14. Catalyseur selon l'une quelconque des revendications 1 à 11, **caractérisé en ce que** ledit au moins un métal dopant du catalyseur est choisi dans le groupe constitué par les métaux alcalins.

15. Catalyseur selon la revendication 12, **caractérisé en ce que** le métal dopant du catalyseur est le lanthane et/ou le cérium.

**16.** Catalyseur selon la revendication 13, **caractérisé en ce que** le métal dopant du catalyseur est le zirconium et/ou le titane.

**17.** Catalyseur selon la revendication 14, **caractérisé en ce que** le métal dopant du catalyseur est le potassium et/ou le magnésium.

**18.** Catalyseur selon l'une quelconque des revendications 1 à 17, dans lequel l'halogène est le chlore.

**19.** Catalyseur selon l'une quelconque des revendications 1 à 18, **caractérisé en ce que** le métal noble est le platine.

**20.** Procédé de préparation d'un catalyseur, **caractérisé en ce qu'**il comprend les étapes suivantes :

a) préparation par mélange puis par mise en forme d'une matrice en alumine constituée d'un mélange d'alumine de transition $\eta$ et d'alumine de transition $\gamma$ , comprenant au moins 3 % en poids d'alumine de transition $\eta$,
b) dépôt sur au moins une des alumines de transition $\gamma$ et $\eta$ des constituants suivants, dans les pourcentages en poids donnés ci-dessous, qui se rapportent au poids du catalyseur,

- de 0,001 à 10 % en poids d'au moins un métal dopant choisi dans le groupe constitué par le titane, le zirconium, le hafnium, le cobalt, le nickel et le zinc, les lanthanides et les métaux alcalins et alcalino-terreux,
- de 0,1 à 15 % en poids d'au moins un halogène choisi dans le groupe constitué par le fluor, le chlore , le brome et l'iode,
- de 0,01 à 2 % d'au moins un métal noble de la famille du platine,
- de 0,005 à 10 % en poids d'aù moins métal promoteur choisi dans le groupe constitué par l'étain, le germanium, l'indium, le gallium, le thallium, l'antimoine, le plomb, le rhénium, le manganèse, le chrome, le molybdène et le tungstène ; les étapes a) et b) pouvant être effectuées dans n'importe quel ordre et les dépôts de l'étape b) pouvant être réalisés en partie seulement avant l'étape a).

**21.** Procédé selon la revendication 20, dans lequel les dépôts sont réalisés par imprégnation à partir d'au moins une solution contenant au moins un composé précurseur d'un constituant à déposer, suivie d'une calcination à une température de 300° à 900°C.

**22.** Procédé selon l'une quelconque des revendications 20 et 21, **caractérisé en ce qu'**il comprend les étapes successives suivantes :

a) mise en forme de la matrice constituée d'un mélange d'alumine $\gamma$ et d'alumine $\eta$,
b) dépôt sur cette matrice d'au moins un métal dopant choisi dans le groupe constitué par le titane, le zirconium, le hafnium, le cobalt, le nickel et le zinc, les lanthanides et les métaux alcalins et alcalino-terreux.
c) dépôt d'au moins un métal promoteur choisi parmi l'étain, le germanium, l'indium, le gallium, le thallium, l'antimoine, le plomb, le rhénium, le manganèse, le chrome, le molybdène et le tungstène,
d) introduction d'au moins un élément choisi dans le groupe constitué par le fluor, le chlore, le brome et l'iode, et
e) dépôt d'au moins un métal noble de la famille du platine.

**23.** Procédé selon la revendication 20, **caractérisé en ce que**, dans la première étape, on dépose le ou les métaux dopants sur l'alumine $\gamma$, l'alumine $\eta$ ou le mélange d'alumines avant la mise en forme du mélange d'alumines.

**24.** Procédé selon la revendication 23, **caractérisé en ce que** l'on dépose le ou les métaux dopants sur l'alumine de transition $\eta$, puis on procède au mélange de l'alumine de transition $\eta$ avec l'alumine de transition $\gamma$ et à la mise en forme du mélange d'alumines.

**25.** Procédé selon la revendication 20, **caractérisé en ce que** l'on dépose le ou les métaux dopants, après mise en forme du mélange d'alumines.

**26.** Procédé selon l'une quelconque des revendications 20 à 25, **caractérisé en ce que** l'on soumet le catalyseur à un traitement thermique complémentaire, effectué pendant une durée de 1 minute à 30 heures, sous une atmosphère gazeuse comprenant de l'eau dont la teneur molaire est de 0,05 à 100 %.

**27.** Procédé selon la revendication 26, dans lequel la teneur molaire en eau est de 1 à 50 %.

**28.** Procédé selon l'une quelconque des revendications 26 et 27, dans lequel la durée du traitement thermique est de 1 à 10 heures.

**29.** Procédé selon l'une quelconque des revendications 26 à 28, **caractérisé en ce que** l'atmosphère gazeuse comprend de plus au moins un halogène.

**30.** Procédé selon la revendication 29, **caractérisé en que** la teneur en halogène de l'atmosphère gazeuse peut aller jusqu'à 20 % en mol.

**31.** Procédé selon la revendication 29, **caractérisé en ce que** la teneur en halogène peut aller jusqu'à 10 % en mol.

**32.** Procédé selon la revendication 29, **caractérisé en ce que** la teneur en halogène peut aller jusqu'à 2 % en mol.

**33.** Procédé selon l'une quelconque des revendications 26 à 32, **caractérisé en ce que** l'atmosphère gazeuse est de l'air, de l'oxygène, de l'argon ou de l'azote.

**Patentansprüche**

**1.** Katalysator, umfassend:

- eine aus einem Gemisch aus $\eta$-Übergangsaluminiumoxid und $\gamma$-Übergangsaluminiumoxid bestehende Matrix, die mindestens 3 Gew.-% $\eta$-Übergangsaluminiumoxid enthält; und - in Gew.-%, bezogen auf den Katalysator - - 0,001 - 10 % mindestens eines Dotierungsmetalls, das aus der aus Titan, Zirconium, Hafnium, Cobalt, Nickel und Zink, den Lanthaniden und den Alkali- und Erdalkalimetallen bestehenden Gruppe ausgewählt ist,
- 0,10 - 15 % mindestens eines Halogens, das aus der aus Fluor, Chlor, Brom und Iod bestehenden Gruppe ausgewählt ist,
- 0,01 - 2,00 % mindestens eines Edelmetalls aus der Platinfamilie und
- 0,005 - 10,00 % mindestens eines Promotormetalls, das aus der aus Zinn, Germanium, Indium, Gallium, Thallium, Antimon, Blei, Rhenium, Mangan, Chrom, Molybdän und Wolfram bestehenden Gruppe ausgewählt ist.

**2.** Katalysator gemäß Anspruch 1, worin die Matrix 3,0 - 99 Gew.-% $\eta$-Übergangsaluminiumoxid umfasst.

**3.** Katalysator gemäß Anspruch 1, worin die Matrix 3,0 - 84 Gew,-% $\eta$-Übergangsaluminiumoxid umfasst.

**4.** Katalysator gemäß Anspruch 1, worin die Matrix 3,0 - 70 Gew.-% $\eta$-Übergangsaluminiumoxid umfasst.

**5.** Katalysator gemäß Anspruch 1, worin die Matrix 5 - 50 Gew.-% $\eta$-Übergangsaluminiumoxid umfasst.

**6.** Katalysator gemäß einem der Ansprüche 1 - 5, worin der Halogengehalt 0,2 - 10 Gew.-% beträgt.

**7.** Katalysator gemäß einem der Ansprüche 1 - 6, worin der Gesamtgehalt an Edelmetallen 0,1 - 0,8 Gew,-% beträgt.

**8.** Katalysator gemäß einem der Ansprüche 1 - 7, worin das Promotormetall aus der aus Zinn, Germanium, Indium, Antimon, Blei, Thallium, Gallium und deren Gemischen gebildeten Gruppe ausgewählt ist.

**9.** Katalysator gemäß einem der Ansprüche 1 - 8, worin das Promotormetall Zinn ist.

**10.** Katalysator gemäß einem der Ansprüche 1 - 7, worin das Promotormetall des Katalysators aus der aus Rhenium, Mangan, Chrom, Molybdän, Wolfram, Indium, Thallium und deren Gemischen gebildeten Gruppe ausgewählt ist.

**11.** Katalysator gemäß Anspruch 10, worin das Promotormetall des Katalysators Rhenium ist.

**12.** Katalysator gemäß einem der Ansprüche 1 - 11, **dadurch gekennzeichnet, dass** das mindestens eine Dotierungsmetall des Katalysators aus der Gruppe der Lanthaniden ausgewählt ist.

**EP 0 832 168 B1**

**13.** Katalysator gemäß einem der Ansprüche 1 - 11, **dadurch gekennzeichnet, dass** das mindestens eine Dotierungsmetall des Katalysators aus der aus Titan, Zirconium, Hafnium, Cobalt, Nickel und Zink bestehenden Gruppe ausgewählt ist.

**14.** Katalysator gemäß einem der Ansprüche 1 - 11, **dadurch gekennzeichnet, dass** das mindestens eine Dotierungsmetall des Katalysators aus der aus den Alkalimetallen bestehenden Gruppe ausgewählt ist.

**15.** Katalysator gemäß Anspruch 12, **dadurch gekennzeichnet, dass** das Dotierungsmetall des Katalysators Lanthan und/oder Cer ist.

**16.** Katalysator gemäß Anspruch 13, **dadurch gekennzeichnet, dass** das Dotierungsmetall des Katalysators Zirconium und/oder Titan ist.

**17.** Katalysator gemäß Anspruch 14, **dadurch gekennzeichnet, dass** das Dotierungsmetall des Katalysators Kalium und/oder Magnesium ist.

**18.** Katalysator gemäß einem der Ansprüche 1 - 17, worin das Halogen Chlor ist.

**19.** Katalysator gemäß einem der Ansprüche 1 - 18, **dadurch gekennzeichnet, dass** das Edelmetall Platin ist.

**20.** Verfahren zur Herstellung eines Katalysators, **dadurch gekennzeichnet, dass** es die folgenden Stufen umfasst:

a) Herstellung einer aus einer Mischung von η-Übergangsaluminiumoxid und γ-Übergangsaluminiumoxid bestehenden Aluminiumoxidmatrix, die mindestens 3 Gew.-% η-Übergangsaluminiumoxid enthält, durch Vermischen und anschließendes Formen,

b) Ablagerung der im folgenden angegebenen Komponenten auf dem γ- und/oder dem η-Übergangsaluminiumoxid in den im folgenden angegebenen Gewichtsanteilen, die auf das Gewicht des Katalysators bezogen sind,

- 0,001 - 10 Gew.-% mindestens eines Dotierungsmetalls, das aus der aus Titan, Zirconium, Hafnium, Cobalt, Nickel und Zink, den Lanthaniden und den Alkali- und Erdalkalimetallen bestehenden Gruppe ausgewählt ist,
- 0,10 - 15 Gew.-% mindestens eines Halogens, das aus der aus Fluor, Chlor, Brom und Iod bestehenden Gruppe ausgewählt ist,
- 0,01 - 2,00 % mindestens eines Edelmetalls aus der Platinfamilie und
- 0,005 - 10,00 Gew.-% mindestens eines Promotormetalls, das aus der aus Zinn, Germanium, Indium, Gallium, Thallium, Antimon, Blei, Rhenium, Mangan, Chrom, Molybdän und Wolfram bestehenden Gruppe ausgewählt ist,

wobei die Stufen a) und b) in beliebiger Reihenfolge durchgeführt werden können und die Ablagerungen der Stufe b) teilweise nur vor der Stufe a) realisiert werden können.

**21.** Verfahren gemäß Anspruch 20, wobei die Ablagerungen durch Tränken mit mindestens einer Lösung, die mindestens eine Vorläuferverbindung einer abzulagernden Komponente enthält, und ein anschließendes Brennen bei einer Temperatur von 300 - 900 °C durchgeführt werden.

**22.** Verfahren gemäß einem der Ansprüche 20 und 21, **dadurch gekennzeichnet, dass** es die im folgenden angegebenen aufeinanderfolgenden Stufen umfasst:

a) Formen der aus einer Mischung von γ-Aluminiumoxid und η-Aluminiumoxid bestehenden Matrix,

b) Ablagerung mindestens eines Dotierungsmetalls, das aus der aus Titan, Zirconium, Hafnium, Cobalt, Nickel und Zink, den Lanthaniden und den Alkali- und Erdalkalimetallen bestehenden Gruppe ausgewählt ist, auf dieser Matrix,

c) Ablagerung mindestens eines Promotormetalls, das aus Zinn, Germanium, Indium, Gallium, Thallium, Antimon, Blei, Rhenium, Mangan, Chrom, Molybdän und Wolfram ausgewählt ist,

d) Einführen mindestens eines Elements, das aus der aus Fluor, Chlor, Brom und Iod bestehenden Gruppe ausgewählt ist, und

e) Ablagerung mindestens eines Edelmetalls aus der Platinfamilie.

**23.** Verfahren gemäß Anspruch 20, **dadurch gekennzeichnet, dass** in der ersten Stufe das Dotierungsmetall oder die Dotierungsmetalle auf $\gamma$-Aluminiumoxid, $\eta$-Aluminiumoxid oder der Aluminiumoxidmischung abgelagert werden, bevor das Gemisch der Aluminiumoxide geformt wird.

**24.** Verfahren gemäß Anspruch 23, **dadurch gekennzeichnet, dass** das Dotierungsmetall oder die Dotierungsmetalle auf dem $\eta$-Übergangsaluminiumoxid abgelagert werden, anschließend das $\eta$-Übergangsaluminiumoxid mit dem $\gamma$-Übergangsaluminiumoxid gemischt wird und dann das Gemisch der Aluminiumoxide geformt wird.

**25.** Verfahren gemäß Anspruch 20, **dadurch gekennzeichnet, dass** das Dotierungsmetall oder die Dotierungsmetalle nach dem Formen des Gemischs der Aluminiumoxide abgelagert werden.

**26.** Verfahren gemäß einem der Ansprüche 20 - 25, **dadurch gekennzeichnet, dass** der Katalysator einer ergänzenden Wärmebehandlung unterzogen wird, die über eine Zeitdauer von 1 min bis 30 h in einer Gasatmosphäre, die Wasser enthält, dessen Molgehalt 0,05 - 100 % beträgt, durchgeführt wird.

**27.** Verfahren gemäß Anspruch 26, wobei der Molgehalt an Wasser 1 - 50 % beträgt.

**28.** Verfahren gemäß einem der Ansprüche 26 und 27, wobei die Zeitdauer der Wärmebehandlung 1 - 10 h beträgt.

**29.** Verfahren gemäß einem der Ansprüche 26 - 28, **dadurch gekennzeichnet, dass** die Gasatmosphäre außerdem mindestens ein Halogen umfasst.

**30.** Verfahren gemäß Anspruch 29, **dadurch gekennzeichnet, dass** der Halogengehalt der Gasatmosphäre bis zu 20 Mol-% betragen kann.

**31.** Verfahren gemäß Anspruch 29, **dadurch gekennzeichnet, dass** der Halogengehalt bis zu 10 Mol-% betragen kann.

**32.** Verfahren gemäß Anspruch 29, **dadurch gekennzeichnet, dass** der Halogengehalt bis zu 2 Mol-% betragen kann.

**33.** Verfahren gemäß einem der Ansprüche 26 - 32, **dadurch gekennzeichnet, dass** die Gasatmosphäre Luft, Sauerstoff, Argon oder Stickstoff ist.

**Claims**

**1.** Catalyst comprising:

- a matrix constituted by a mixture of $\eta$ transition alumina and $\gamma$ transition alumina, comprising at least 3 wt.% $\eta$ transition alumina and, expressed as weight percentages based on the catalyst:

- 0.001 to 10% of at least one doping metal chosen from within the group constituted by titanium, zirconium, hafnium, cobalt, nickel and zinc, lanthanides and alkali and alkaline earth metals,
- 0.10 to 15% of at least one halogen chosen from within the group constituted by fluorine, chlorine, bromine and iodine,
- 0.01 to 2.00% of at least one noble metal from the platinum family and
- 0.005 to 10.00% of at least one promoter metal chosen from within the group constituted by tin, germanium, indium, gallium, thallium, antimony, lead, rhenium, manganese, chromium, molybdenum and tungsten.

**2.** Catalyst according to claim 1, wherein the matrix comprises 3.0 to 99 wt.% $\eta$ transition alumina.

**3.** Catalyst according to claim 1, wherein the matrix comprises 3.0 to 84 wt.% $\eta$ transition alumina.

4. Catalyst according to claim 1, wherein the matrix comprises 3.0 to 70 wt.% η transition alumina.

5. Catalyst according to claim 1, wherein the matrix comprises 5 to 50 wt.% η transition alumina.

6. Catalyst according to any one of the claims 1 to 5, wherein the halogen content is 0.2 to 10 wt.%.

7. Catalyst according to any one of the claims 1 to 6, wherein the total noble metal content is 0.1 to 0.8 wt.%.

8. Catalyst according to any one of the claims 1 to 7, wherein the promoter metal is chosen from within the group formed by tin, germanium, indium, antimony, lead, thallium, gallium and mixtures thereof.

9. Catalyst according to any one of the claims 1 to 8, wherein the promoter metal is tin.

10. Catalyst according to any one of the claims 1 to 7, wherein the promoter metal of the catalyst is chosen from within the group formed by rhenium, manganese, chromium, molybdenum, tungsten, indium, thallium and mixtures thereof.

11. Catalyst according to claim 10, wherein the promoter metal of the catalyst is rhenium.

12. Catalyst according to any one of the claims 1 to 11, **characterized in that** said at least one doping metal of the catalyst is chosen from within the lanthanide group.

13. Catalyst according to any one of the claims 1 to 11, **characterized in that** said at least one doping metal of the catalyst is chosen from within the group constituted by titanium, zirconium, hafnium, cobalt, nickel and zinc.

14. Catalyst according to any one of the claims 1 to 11, **characterized in that** said at least one doping metal of the catalyst is chosen from within the group constituted by alkali metals.

15. Catalyst according to claim 12, **characterized in that** the doping metal of the catalyst is lanthanum and/or cerium.

16. Catalyst according to claim 13, **characterized in that** the doping metal of the catalyst is zirconium and/or titanium.

17. Catalyst according to claim 14, **characterized in that** the doping metal of the catalyst is potassium and/or magnesium.

18. Catalyst according to any one of the claims 1 to 17, wherein the halogen is chlorine.

19. Catalyst according to any one of the claims 1 to 18, **characterized in that** the noble metal is platinum.

20. Process for the preparation of a catalyst, **characterized in that** it comprises the following steps:

   a) preparation by mixing and then shaping of an alumina matrix constituted by a mixture of η transition alumina and γ transition alumina comprising at least 3 wt.% η transition alumina,
   b) deposition on at least one of the γ and η transition aluminas of the following constituents, in the weight percentages given hereinafter and which is based on the weight of the catalyst,

   - 0.001 to 10 wt.% of at least one doping metal chosen from within the group constituted by titanium, zirconium, hafnium, cobalt, nickel and zinc, lanthanides and alkali and alkaline earth metals,
   - 0.1 to 15 wt.% of at least one halogen chosen from within the group constituted by fluorine, chlorine, bromine and iodine,
   - 0.01 to 2% of at least one noble metal from the platinum family,
   - 0.005 to 10 wt.% of at least one promoter metal chosen from within the group constituted by tin, germanium, indium, gallium, thallium, antimony, lead, rhenium, manganese, chromium, molybdenum and tungsten, in which steps a) and b) can be performed in any random order and the depositions of step b) can be performed only in part prior to step a).

21. Process according to claim 20, wherein the depositions take place by impregnation on the basis of at least one solution containing at least one precursor compound of a constituent to be deposited, followed by calcination at a temperature from 300 to 900°C.

22. Process according to either of the claims 20 and 21, **characterized in that** it comprises the following successive steps:

a) shaping the matrix constituted by a mixture of γ alumina and η alumina,
b) deposition on said matrix of at least one doping metal chosen from within the group constituted by titanium, zirconium, hafnium, cobalt, nickel and zinc, lanthanides and alkali and alkaline earth metals,
c) deposition of at least one promoter metal chosen from among tin, germanium, indium, gallium, thallium, antimony, lead, rhenium, manganese, chromium, molybdenum and tungsten,
d) introduction of at least one element chosen from within the group constituted by fluorine, chlorine, bromine and iodine and
e) deposition of at least one noble metal from the platinum family.

23. Process according to claim 20, **characterized in that**, in the first step, the doping metal or metals are deposited on the γ alumina, η alumina or mixture of aluminas prior to the shaping of the mixture of aluminas.

24. Process according to claim 23, **characterized in that** the doping metal or metals are deposited on the η transition alumina, followed by the mixing of the η transition alumina with the γ transition alumina and the shaping of the mixture of aluminas.

25. Process according to claim 20, **characterized in that** the doping metal or metals are deposited following the shaping of the mixture of aluminas.

26. Process according to any one of the claims 20 to 25, **characterized in that** the catalyst undergoes a complimentary heat treatment, performed for between one minute and 30 hours, under a gaseous atmosphere containing water, whose molar content is 0.05 to 100%.

27. Process according to claim 26, wherein the water molar content is 1 to 50%.

28. Process according to either of the claims 26 and 27, wherein the duration of the heat treatment is 1 to 10 hours.

29. Process according to any one of the claims 26 to 28, **characterized in that** the gaseous atmosphere also comprises at least one halogen.

30. Process according to claim 29, **characterized in that** the halogen content of the gaseous atmosphere can be up to 20 mole %.

31. Process according to claim 29, **characterized in that** the halogen content can be up to 10 mole %.

32. Process according to claim 29, **characterized in that** the halogen content can be up to 2 mole %.

33. Process according to any one of the claims 26 to 32, **characterized in that** the gaseous atmosphere is air, oxygen, argon or nitrogen.